# EUROPEAN PATENT APPLICATION

(11) **EP 4 632 781 A1**
(43) Date of publication of application: **15.10.2025**
(21) Application number: 24169510.5
(22) Date of filing: 10.04.2024
(51) Int. Cl.: H01H 33/52, H01H 33/53, H01H 33/66

(54) **SUBSEA CIRCUIT BREAKER**

(71) Applicant: ABB SCHWEIZ AG, 5400 Baden (CH)
(72) Inventor: CHEERLA, Srinivasa Rao, 40477 Düsseldorf (DE); GENTSCH, Dietmar, 40882 Ratingen (DE)
(74) Representative: Maiwald GmbH

(57) **Abstract**

The present invention relates to a subsea circuit breaker, comprising:
- a vacuum interrupter (10);
- a pushrod (30);
- an actuator (50, 50a); and
- a housing (60);
wherein the vacuum interrupter is located within the housing;
wherein the pushrod is located within the housing;
wherein the actuator is located within the housing;
wherein the actuator is configured to actuate the pushrod;
wherein the pushrod is configured when actuated to move a moveable contact of the vacuum interrupter with respect to a fixed contact of the vacuum interrupter; and
wherein the circuit breaker is configured to operate at a subsea water pressure or under higher pressure than atmospheric gas pressure condition in a switchgear.

## Description

### FIELD OF THE INVENTION

The present invention relates to a subsea circuit breaker and pole arrangement, and a subsea circuit breaker system.

### BACKGROUND OF THE INVENTION

Available subsea interruption devices are developed for a rated voltage of 36kV and current up to but not above 1250A.

There is a need to have a cost effective solution for a subsea interruption device that operates at voltages of around 72KV and above at currents at 1250A and above.

### SUMMARY OF THE INVENTION

Therefore, it would be advantageous to provide subsea interruption device that operates at voltages of around 72kV and above and at currents at 1250A and above.

The object of the present invention is solved with the subject matter of the independent claims, wherein further embodiments are incorporated in the dependent claims.

In a first aspect, there is provided a subsea circuit breaker, comprising:
- a vacuum interrupter;
- a pushrod;
- an actuator; and
- a housing;

The vacuum interrupter is located within the housing. The pushrod is located within the housing. The actuator is located within the housing. The actuator is configured to actuate the pushrod. The pushrod is configured when actuated to move a moveable contact of the vacuum interrupter with respect to a fixed contact of the vacuum interrupter. The circuit breaker is configured to operate at a subsea water pressure.

Thus, the new development is a pressure resistance subsea circuit breaker.

In an example, the circuit breaker is configured to operate at a subsea water pressure up to 300bar or more.

In an example, the circuit breaker is configured to operate at the subsea water pressure associated with the operation of an offshore wind turbine.

In an example, the circuit breaker is configured to operate at voltages above 36kV.

In an example, the circuit breaker is configured to operate at voltages above 72kV.

In an example, the circuit breaker is configured to operate at voltages above 132kV.

In an example, the circuit breaker is configured to operate at currents of 1250A - or higher.

In an example, the housing is configured to withstand the subsea water pressure.

Thus, the housing surrounding the vacuum interrupter and associated interrupter systems is itself able to withstand the high-water pressures.

In an example, the circuit breaker comprises an enclosure. The housing is located within the enclosure, and a dielectric fluid is located between an outer surface of the housing and an inner surface of the enclosure.

Thus, the enclosure surrounding the housing within which the vacuum interrupter and associated interrupter systems are located enables the high potential parts to be electrically isolated from the surrounding water via the dielectric fluid. The enclosure need not be a pressure resistant vessel itself, where the inner housing is pressure resistant and where in effect the enclosure itself is pressure compensated such that the dielectric fluid exerts the pressure onto the housing, where the housing can withstand the pressure. The enclosure could however be designed to be pressure resistant and thus the dielectric fluid and nor the housing experiences the high pressure, and the housing need not itself be designed to withstand a high pressure itself. However, even when the enclosure can withstand the high pressure, the housing can also be designed to withstand the high pressure to provide in a double system of pressure withstand protection.

In an example, the enclosure is configured to withstand the subsea water pressure.

In an example, the circuit breaker comprises a second vacuum interrupter in series with the first vacuum interrupter. The circuit breaker comprises a second pushrod. The second pushrod is configured when actuated to move a moveable contact of the second vacuum interrupter with respect to a fixed contact of the second vacuum interrupter.

Thus, the vacuum interrupters in series can provide for increased voltage operation.

In an example, the second vacuum interrupter is located within the housing. The second pushrod is located within the housing and the actuator is configured to actuate the second pushrod.

In an example, the second vacuum interrupter is located within the housing. The second pushrod is located within the housing. The circuit breaker comprises a second actuator. The second actuator is located within the housing, and the second actuator is configured to actuate the second pushrod.

Thus, the vacuum interrupters in series that provide for increased voltage operation are in effect in an end to end in such a way that the drive can operate two sides at the same time configuration, within a housing that could be a number of individual housing parts connected to each other, and where one actuator, for example at a centre position can operate both vacuum interrupters or each vacuum interrupter can be operated by its own actuator.

In an example, the circuit breaker comprises a second housing. The circuit breaker comprises a second actuator. The second vacuum interrupter is located within the second housing. The second pushrod is located within the second housing. The second actuator is located within the second housing, the second actuator is configured to actuate the second pushrod.

Thus, the vacuum interrupters in series that provide for increased voltage operation are in effect in a side-to-side configuration, within their own housings that could be a number of individual housing parts connected to each other. Each vacuum interrupter is operated by its own actuator.

In an example, the second housing is configured to withstand the subsea water pressure.

In an example, the second housing is located within the enclosure, and the dielectric fluid is located between an outer surface of the second housing and an inner surface of the enclosure.

In second aspect, there is provided a subsea circuit breaker system, comprising:
- a vacuum interrupter for a first phase, a vacuum interrupter for a second phase, and a vacuum interrupter for a third phase;
- a pushrod for the first phase, a pushrod for the second phase, and a pushrod for the third phase;
- an actuator for the first phase, an actuator for the second phase, and an actuator for the third phase;
   and
- a housing for a first phase, a housing for a second phase, and a housing for a third phase;

The vacuum interrupter for the first phase, the pushrod for the first phase, and the actuator for the first phase are located within the housing for the first phase. The vacuum interrupter for the second phase, the pushrod for the second phase, and the actuator for the second phase are located within the housing for the second phase. The vacuum interrupter for the third phase, the pushrod for the third phase, and the actuator for the third phase are located within the housing for the third phase. The actuator for the first phase is configured to actuate the pushrod for the first phase, the actuator for the second phase is configured to actuate the pushrod for the second phase, the actuator for the third phase is configured to actuate the pushrod for the third phase. The pushrod for the first phase is configured when actuated to move a moveable contact of the vacuum interrupter for the first phase with respect to a fixed contact of the vacuum interrupter for the first phase. The pushrod for the second phase is configured when actuated to move a moveable contact of the vacuum interrupter for the second phase with respect to a fixed contact of the vacuum interrupter for the second phase. The pushrod for the third phase is configured when actuated to move a moveable contact of the vacuum interrupter for the third phase with respect to a fixed contact of the vacuum interrupter for the third phase. The circuit breaker system is configured to operate at a subsea water pressure.

Thus, the above-described circuit breaker was a single-phase device, and here a three phase interrupting subsea system is provided.

In an example, the subsea circuit breaker system is configured to operate at the subsea water pressure associated with the operation of an offshore wind turbine.

In an example, the circuit breaker system is configured to operate at voltages above 36kV.

In an example, the circuit breaker system is configured to operate at voltages above 72kV.

In an example, the circuit breaker is configured to operate at voltages above 132kV.

In an example, the circuit breaker system is configured to operate at currents of 1250A - or higher.

In an example, the housing for the first phase, the housing for the second phase, and the housing for the third phase are configured to withstand the subsea water pressure.

In an example, the circuit breaker system comprises an enclosure. The housing for the first phase, the housing for the second phase, and the housing for the third phase are located within the enclosure. A dielectric fluid is located between an outer surface of the housing for the first phase, an outer surface of the housing for the second phase, and an outer surface of the housing for the third phase and an inner surface of the enclosure.

In an example, the enclosure is configured to withstand the subsea water pressure.

In an example, the circuit breaker system comprises a second vacuum interrupter for the first phase in series with the first vacuum interrupter for the first phase, a second vacuum interrupter for the second phase in series with the first vacuum interrupter for the second phase, and a second vacuum interrupter for the third phase in series with the first vacuum interrupter for the third phase. The circuit breaker system comprises a second pushrod for the first phase, a second pushrod for the second phase, a second pushrod for the third phase. The second pushrod for the first phase is configured when actuated to move a moveable contact of the second vacuum interrupter for the first phase with respect to a fixed contact of the second vacuum interrupter for the first phase. The second pushrod for the second phase is configured when actuated to move a moveable contact of the second vacuum interrupter for the second phase with respect to a fixed contact of the second vacuum interrupter for the second phase. The second pushrod for the third phase is configured when actuated to move a moveable contact of the second vacuum interrupter for the third phase with respect to a fixed contact of the second vacuum interrupter for the third phase.

In an example, the second vacuum interrupter for the first phase, is located within the housing for the first housing, the second pushrod for the first phase is located within the housing for the first phase and the actuator is configured to actuate the second pushrod for the first phase. The second vacuum interrupter for the second phase, is located within the housing for the second housing, the second pushrod for the second phase is located within the housing for the second phase and the actuator is configured to actuate the second pushrod for the second phase. The second vacuum interrupter for the third phase, is located within the housing for the third housing, the second pushrod for the third phase is located within the housing for the third phase and the actuator is configured to actuate the second pushrod for the third phase.

In an example, the second vacuum interrupter for the first phase is located within the housing for the first phase, the second pushrod for the first phase is located within the housing for the first phase and the circuit breaker system comprises a second actuator for the first phase. The second actuator for the first phase is located within the housing for the first phase, and the second actuator for the first phase is configured to actuate the second pushrod for the first phase. The second vacuum interrupter for the second phase is located within the housing for the second phase, the second pushrod for the second phase is located within the housing for the second phase and the circuit breaker system comprises a second actuator for the second phase. The second actuator for the second phase is located within the housing for the second phase, and the second actuator for the second phase is configured to actuate the second pushrod for the second phase. The second vacuum interrupter for the third phase is located within the housing for the third phase, the second pushrod for the third phase is located within the housing for the third phase and the circuit breaker system comprises a second actuator for the third phase. The second actuator for the third phase is located within the housing for the third phase, and the second actuator for the third phase is configured to actuate the second pushrod for the third phase.

In an example, the circuit breaker system comprises a second housing for the first phase, a second housing for the second phase, and a second housing for the third phase. The circuit breaker system comprises a second actuator for the first phase, a second actuator for the second phase, and a second actuator for the third phase. The second vacuum interrupter for the first phase is located within the second housing for the first phase, the second pushrod for the first phase is located within the second housing for the first phase, the second actuator for the first phase is located within the second housing for the first phase. The second actuator for the first phase is configured to actuate the second pushrod for the first phase. The second vacuum interrupter for the second phase is located within the second housing for the second phase, the second pushrod for the second phase is located within the second housing for the second phase, the second actuator for the second phase is located within the second housing for the second phase. The second actuator for the second phase is configured to actuate the second pushrod for the second phase; The second vacuum interrupter for the third phase is located within the second housing for the third phase, the second pushrod for the third phase is located within the second housing for the third phase. The second actuator for the third phase is located within the second housing for the third phase. The second actuator for the third phase is configured to actuate the second pushrod for the third phase.

In an example, the second housing for the first phase, the second housing for the second phase, and the second housing for the third phase are configured to withstand the subsea water pressure.

In an example, the second housing for the first phase, the second housing for the second phase, and the second housing for the third phase are located within the enclosure. The dielectric fluid is located between an outer surface of the second housing of the first phase, between an outer surface of the second housing of the second phase, between an outer surface of the second housing of the third phase and an inner surface of the enclosure.

In a third aspect, there is provided a circuit breaker, comprising:
- a vacuum interrupter;
- a pushrod;
- an actuator; and
- a housing;
   wherein the vacuum interrupter is located within the housing;
   wherein the pushrod is located within the housing;
   wherein the actuator is located within the housing;
   wherein the actuator is configured to actuate the pushrod;
   wherein the pushrod is configured when actuated to move a moveable contact of the vacuum interrupter with respect to a fixed contact of the vacuum interrupter; and
   wherein the circuit breaker is configured to operate at a pressure above atmospheric pressure in a switchgear.

Thus, the circuit breaker is configured to operate under higher pressure than atmospheric gas pressure condition in a switchgear.

In an example, the circuit breaker is configured to operate under pressure associated with the operation of an offshore wind turbine.

In an example, the circuit breaker is configured to operate by eccentric drive system to transfer rotary movement to linear movement.

In an example, the vacuum interrupter insulation material lays at the inner surface of the outer housing surface.

In an example, the vacuum interrupter insulation material has a distance towards the inner surface of the outer housing surface to provide an insulation gas gap between the VI touchable surface and the outer insulation layer or housing.

### BRIEF DESCRIPTION OF THE DRAWINGS

Exemplary embodiments will be described in the following with reference to the following drawing:

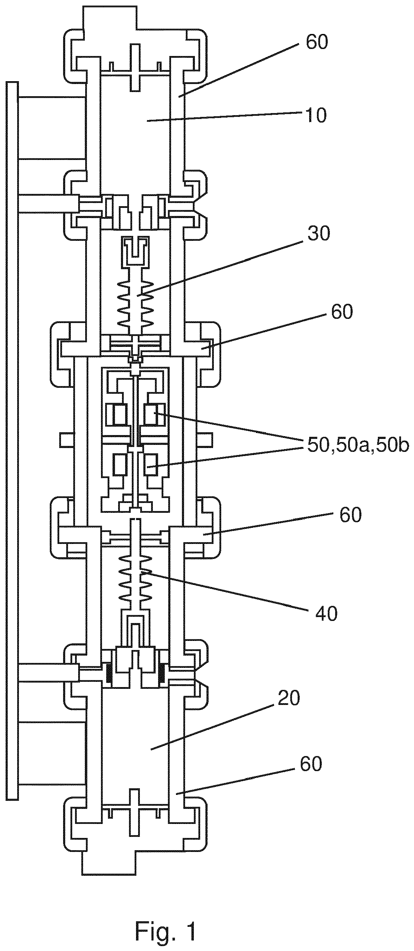

Fig. 1 shows an example of a circuit breaker formed from two vacuum interrupters, with two pushrods and two separate actuators in a single housing, that could be made of multiple housing parts connected to one another, where the vacuum type VG-X is an example vacuum interrupter (VI) and a magnetic actuator is an example actuator; or there can be used a rotary drive where both sides are moved by applying lever or eccentric drive mechanism.

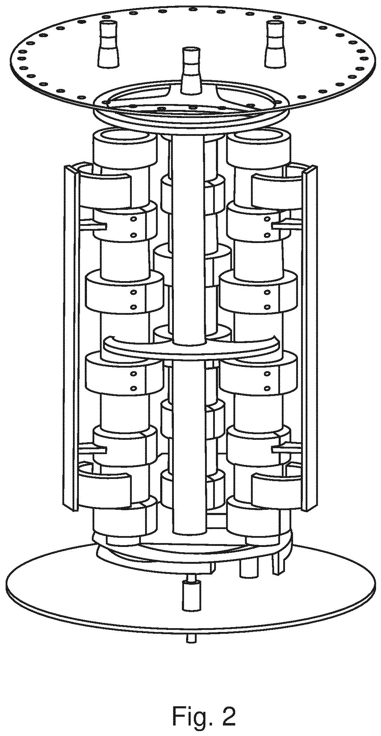

Fig. 2 shows an example of a three phase circuit breaker system with three individual circuit breakers, one for each phase, each circuit breaker from two vacuum interrupters end to end in series, with each having two pushrods and two separate actuators in a single housing, that could be made of multiple housing parts connected to one another, but where the housings for the three phases are separate, and where top and bottom flanges of an surrounding enclosure are shown;

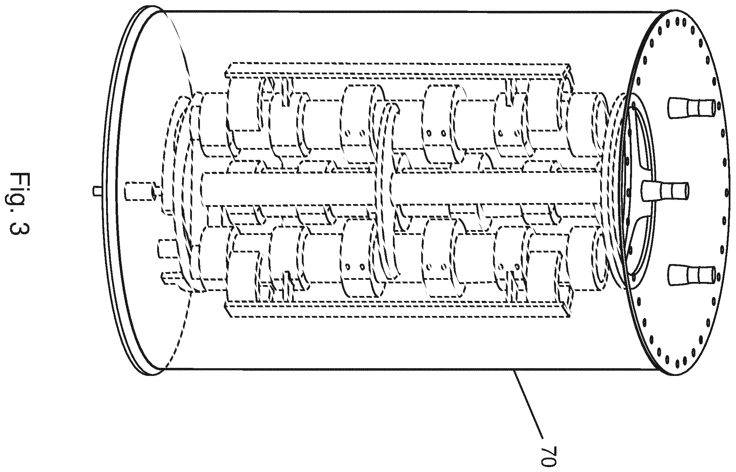

Fig. 3 shows an example of a three phase circuit breaker system with three individual circuit breakers, one for each phase, each circuit breaker formed from two vacuum interrupters end to end in series, with each having two pushrods and two separate actuators in a single housing, that could be made of multiple housing parts connected to one another, but where the housings for the three phases are separate, and where top and bottom flanges of an surrounding enclosure are shown along with the cylindrical wall of the enclosure; and

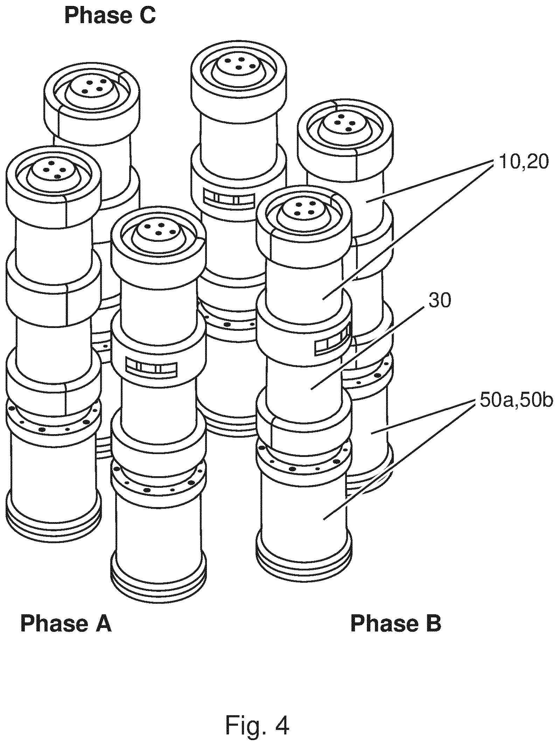

Fig. 4 shows an example of a three phase circuit breaker system with three individual circuit breakers, one for each phase, each circuit breaker formed from two vacuum interrupters side to side in series, with each vacuum interrupter of a circuit breaker pair for a phase having a pushrods and a separate actuators in a single housing, that could be made of multiple housing parts connected to one another, but where the housings for the two Vls that make up circuit breaker are separate.

### DETAILED DESCRIPTION OF EMBODIMENTS

Figs. 1-4 relate to a subsea circuit breaker, and a subsea circuit breaker three phase system. The vacuum type is shown as a VG-X type, but this is just an example and different types of Vls can be utilized, and the actuator is shown as a magnetic actuator, where this is an actuator and different types of mechanical/electro-mechanical actuators can be utilized. A support structure can support a housing 60 or housings 60 within which vacuum interrupters are located, where that support structure can be within an enclosure 70. Electrical connections including busbars can lead to contacts of the vacuum interrupters that can extend out through a top of the enclosure for example. It is to be noted that in Figs. 1-4 each circuit breaker is formed from two vacuum interrupters in series, to provide for increased voltage operation, but each circuit breaker could be formed from a single vacuum interrupter or formed from more than two vacuum interrupters in series. Thus, in Figs. 1-3 there could be 3, 4, 5, or more vacuum interrupters in an "end to end" configuration and in Fig. 4 there could be 3, 4, 5 or more vacuum interrupters in series side by side for each phase. Also, in Fig. 4, each of the housings shown could be a housing as shown in Fig. 1 with two vacuum interrupters, where it is paired with another such housing with two vacuum interrupters, where these four vacuum interrupters are in series and provide a single circuit breaker for one of the phases, and where other two phases similarly have four Vls making up the circuit breaker for that phase, providing for high voltage in a compact form, for subsea interruption requirements.

An example subsea circuit breaker comprises:
- a vacuum interrupter 10;
- a pushrod 30;
- an actuator 50, 50a; and
- a housing 60.

The vacuum interrupter is located within the housing 60. The pushrod is located within the housing. The actuator is located within the housing. The actuator is configured to actuate the pushrod. The pushrod is configured when actuated to move a moveable contact of the vacuum interrupter with respect to a fixed contact of the vacuum interrupter. The circuit breaker is configured to operate at a subsea water pressure.

Thus, the new development is a pressure resistance subsea circuit breaker.

In an example, the circuit breaker is configured to operate at a subsea water pressure up to 300bar or more.

In an example, the circuit breaker is configured to operate at the subsea water pressure associated with the operation of an offshore wind turbine.

In an example, the circuit breaker is configured to operate at voltages above 36kV.

In an example, the circuit breaker is configured to operate at voltages above 72kV.

In an example, the circuit breaker is configured to operate at voltages above 132kV.

In an example, the circuit breaker is configured to operate at currents of 1250A. The circuit breaker can be configured to operate at currents above 1250A.

In an example, the housing is configured to withstand the subsea water pressure.

Thus, the housing surrounding the vacuum interrupter and associated interrupter systems is itself able to withstand the high-water pressures.

In an example, the circuit breaker comprises an enclosure 70. The housing is located within the enclosure, and a dielectric fluid is located between an outer surface of the housing and an inner surface of the enclosure.

Thus, the enclosure surrounding the housing within which the vacuum interrupter and associated interrupter systems are located enables the high potential parts to be electrically isolated from the surrounding water via the dielectric fluid. The enclosure need not be a pressure resistant vessel itself, where the inner housing is pressure resistant and where in effect the enclosure is pushed inwards such that the dielectric fluid exerts the subsea pressure onto the housing, but where the housing can withstand the pressure. The enclosure could however be designed to be pressure resistant and thus the dielectric fluid and nor the housing experiences the high pressure, and the housing need not itself be designed to withstand a high pressure itself. However, even when the enclosure can withstand a or the high pressure, the housing can also be designed to withstand the high pressure to provide in a double system of pressure withstand protection.

In an example, the enclosure is configured to withstand the subsea water pressure.

In an example, the circuit breaker comprises a second vacuum interrupter 20 in series with the first vacuum interrupter 10. The circuit breaker comprises a second pushrod 40. The second pushrod is configured when actuated to move a moveable contact of the second vacuum interrupter with respect to a fixed contact of the second vacuum interrupter.

Thus, the vacuum interrupters in series can provide for increased voltage operation.

In an example, the second vacuum interrupter is located within the housing. The second pushrod is located within the housing and the actuator 50, 50a is configured to actuate the second pushrod.

Thus, although in Fig. 1 two actuators 50a, 50b are shown, just one actuator 50 or 50a could be utilized to actuate the pushrods 30 and 40 for both vacuum interrupters 10 and 20. Here, there are other mechanical linkage parts, and indeed energy storage devices, involved in moving the moveable contact of a vacuum interrupter, and for simplicity such a complete system has been here referred to as a "pushrod", and where here actuation of the pushrod by the actuator means actuation of the drive system involved with moving the moveable contact.

In an example, the second vacuum interrupter is located within the housing. The second pushrod is located within the housing. The circuit breaker comprises a second actuator. The second actuator is located within the housing, and the second actuator is configured to actuate the second pushrod.

This is shown in Figs. 1-3, where the vacuum interrupters are in series in an "end to end" configuration within a single housing (where a single housing could be formed from a number of different parts connected together, as shown in Fig. 1).

Thus, the vacuum interrupters in series that provide for increased voltage operation are in effect in an "end to end" (that means there are two fixed contacts at the end and the movable part of device in the middle) configuration, within a housing that could be a number of individual housing parts connected to each other, and where one actuator, for example at a centre position can operate both vacuum interrupters or each vacuum interrupter can be operated by its own actuator.

In an example, the circuit breaker comprises a second housing 60. The circuit breaker comprises a second actuator 50b. The second vacuum interrupter is located within the second housing. The second pushrod is located within the second housing. The second actuator is located within the second housing, the second actuator is configured to actuate the second pushrod.

This is shown in Fig. 4, where the vacuum interrupters are in series in a side by configuration, where again a circuit breaker is formed from two vacuum interrupters enabling higher voltage operation, and where each vacuum interrupter is within its own housing (where a housing could be formed from a number of different parts connected together).

Thus, the vacuum interrupters in series that provide for increased voltage operation are in effect in a side to side configuration, within their own housings that could be a number of individual housing parts connected to each other. Each vacuum interrupter is operated by its own actuator.

In an example, the second housing is configured to withstand the subsea water pressure.

In an example, the second housing is located within the enclosure, and the dielectric fluid is located between an outer surface of the second housing and an inner surface of the enclosure.

An example a subsea circuit breaker system comprises:
- a vacuum interrupter for a first phase 10, a vacuum interrupter for a second phase 10, and a vacuum interrupter for a third phase 10;
- a pushrod for the first phase 30, a pushrod for the second phase 30, and a pushrod for the third phase 30;
- an actuator for the first phase 50, 50a, an actuator for the second phase 50, 50a, and an actuator for the third phase 50, 50a;
   and
- a housing for a first phase 60, a housing for a second phase 60, and a housing for a third phase 60.

The vacuum interrupter for the first phase, the pushrod for the first phase, and the actuator for the first phase are located within the housing for the first phase. The vacuum interrupter for the second phase, the pushrod for the second phase, and the actuator for the second phase are located within the housing for the second phase. The vacuum interrupter for the third phase, the pushrod for the third phase, and the actuator for the third phase are located within the housing for the third phase. The actuator for the first phase is configured to actuate the pushrod for the first phase, the actuator for the second phase is configured to actuate the pushrod for the second phase, the actuator for the third phase is configured to actuate the pushrod for the third phase. The pushrod for the first phase is configured when actuated to move a moveable contact of the vacuum interrupter for the first phase with respect to a fixed contact of the vacuum interrupter for the first phase. The pushrod for the second phase is configured when actuated to move a moveable contact of the vacuum interrupter for the second phase with respect to a fixed contact of the vacuum interrupter for the second phase. The pushrod for the third phase is configured when actuated to move a moveable contact of the vacuum interrupter for the third phase with respect to a fixed contact of the vacuum interrupter for the third phase. The circuit breaker system is configured to operate at a subsea water pressure.

This is shown in Figs. 2-4, where there are three circuit breakers, one for each phase and where each circuit breaker is formed from two vacuum interrupters. In Figs. 2-3, the two vacuum interrupters of a circuit breaker for one of the phases are in an "end to end" configuration, whilst in Fig. 4 the two vacuum interrupters of a circuit breaker for one of the phases are in a side-by-side configuration.

Thus, the above described circuit breaker was a single phase device, and here a three phase interrupting subsea system is provided.

In an example, the subsea circuit breaker system is configured to operate at the subsea water pressure associated with the operation of an offshore wind turbine.

In an example, the circuit breaker system is configured to operate at voltages above 36kV.

In an example, the circuit breaker system is configured to operate at voltages above 72kV.

In an example, the circuit breaker is configured to operate at voltages above 132kV.

In an example, the circuit breaker system is configured to operate at currents of 1250A. The circuit breaker system can be configured to operate at currents above 1250A.

In an example, the housing for the first phase, the housing for the second phase, and the housing for the third phase are configured to withstand the subsea water pressure.

In an example, the circuit breaker system comprises an enclosure 70. The housing for the first phase, the housing for the second phase, and the housing for the third phase are located within the enclosure. A dielectric fluid is located between an outer surface of the housing for the first phase, an outer surface of the housing for the second phase, and an outer surface of the housing for the third phase and an inner surface of the enclosure.

In an example, the enclosure is configured to withstand the subsea water pressure.

In an example, the circuit breaker system comprises a second vacuum interrupter for the first phase in series with the first vacuum interrupter for the first phase, a second vacuum interrupter for the second phase in series with the first vacuum interrupter for the second phase, and a second vacuum interrupter for the third phase in series with the first vacuum interrupter for the third phase. The circuit breaker system comprises a second pushrod for the first phase, a second pushrod for the second phase, a second pushrod for the third phase. The second pushrod for the first phase is configured when actuated to move a moveable contact of the second vacuum interrupter for the first phase with respect to a fixed contact of the second vacuum interrupter for the first phase. The second pushrod for the second phase is configured when actuated to move a moveable contact of the second vacuum interrupter for the second phase with respect to a fixed contact of the second vacuum interrupter for the second phase. The second pushrod for the third phase is configured when actuated to move a moveable contact of the second vacuum interrupter for the third phase with respect to a fixed contact of the second vacuum interrupter for the third phase.

In an example, the second vacuum interrupter for the first phase, is located within the housing for the first housing, the second pushrod for the first phase is located within the housing for the first phase and the actuator 50, 50a is configured to actuate the second pushrod for the first phase. The second vacuum interrupter for the second phase, is located within the housing for the second housing, the second pushrod for the second phase is located within the housing for the second phase and the actuator 50, 50a is configured to actuate the second pushrod for the second phase. The second vacuum interrupter for the third phase, is located within the housing for the third housing, the second pushrod for the third phase is located within the housing for the third phase and the actuator 50, 50a is configured to actuate the second pushrod for the third phase.

In an example, the second vacuum interrupter for the first phase is located within the housing for the first phase, the second pushrod for the first phase is located within the housing for the first phase and the circuit breaker system comprises a second actuator 50b for the first phase. The second actuator for the first phase is located within the housing for the first phase, and the second actuator for the first phase is configured to actuate the second pushrod for the first phase. The second vacuum interrupter for the second phase is located within the housing for the second phase, the second pushrod for the second phase is located within the housing for the second phase and the circuit breaker system comprises a second actuator 50b for the second phase. The second actuator for the second phase is located within the housing for the second phase, and the second actuator for the second phase is configured to actuate the second pushrod for the second phase. The second vacuum interrupter for the third phase is located within the housing for the third phase, the second pushrod for the third phase is located within the housing for the third phase and the circuit breaker system comprises a second actuator 50b for the third phase. The second actuator for the third phase is located within the housing for the third phase, and the second actuator for the third phase is configured to actuate the second pushrod for the third phase.

In an example, the circuit breaker system comprises a second housing 60 for the first phase, a second housing 60 for the second phase, and a second housing 60 for the third phase. The circuit breaker system comprises a second actuator 50b for the first phase, a second actuator 50b for the second phase, and a second actuator 50b for the third phase. The second vacuum interrupter for the first phase is located within the second housing for the first phase, the second pushrod for the first phase is located within the second housing for the first phase, the second actuator for the first phase is located within the second housing for the first phase. The second actuator for the first phase is configured to actuate the second pushrod for the first phase. The second vacuum interrupter for the second phase is located within the second housing for the second phase, the second pushrod for the second phase is located within the second housing for the second phase, the second actuator for the second phase is located within the second housing for the second phase. The second actuator for the second phase is configured to actuate the second pushrod for the second phase; The second vacuum interrupter for the third phase is located within the second housing for the third phase, the second pushrod for the third phase is located within the second housing for the third phase. The second actuator for the third phase is located within the second housing for the third phase. The second actuator for the third phase is configured to actuate the second pushrod for the third phase.

In an example, the second housing for the first phase, the second housing for the second phase, and the second housing for the third phase are configured to withstand the subsea water pressure.

In an example, the second housing for the first phase, the second housing for the second phase, and the second housing for the third phase are located within the enclosure. The dielectric fluid is located between an outer surface of the second housing of the first phase, between an outer surface of the second housing of the second phase, between an outer surface of the second housing of the third phase and an inner surface of the enclosure.

An exemplar circuit breaker comprises:
- a vacuum interrupter 10;
- a pushrod 30;
- an actuator 50, 50a; and
- a housing 60.

The vacuum interrupter is located within the housing. The pushrod is located within the housing. The actuator is located within the housing. The actuator is configured to actuate the pushrod. The pushrod is configured when actuated to move a moveable contact of the vacuum interrupter with respect to a fixed contact of the vacuum interrupter. The circuit breaker is configured to operate at a pressure above atmospheric pressure in a switchgear.

Thus, the circuit breaker is configured to operate under higher pressure than atmospheric gas pressure condition in a switchgear.

In an example, the circuit breaker is configured to operate under pressure associated with the operation of an offshore wind turbine.

In an example, the circuit breaker is configured to operate by eccentric drive system to transfer rotary movement to linear movement.

In an example, the vacuum interrupter insulation material lays at the inner surface of the outer housing surface.

In an example, the vacuum interrupter insulation material has a distance towards the inner surface of the outer housing surface to provide an insulation gas gap between the VI touchable surface and the outer insulation layer or housing.

The subsea circuit breaker, and the subsea circuit breaker system, and also the circuit breaker configured to operate at a pressure above atmospheric pressure, are now described in specific detail with respect to embodiments, where reference is again made to Figs. 1-4.

As detailed above, a new circuit breaker and circuit breaker system, for example for a three-phase system, has been developed that can operate for subsea applications, providing for a subsea switchgear, and also at elevated atmospheric pressures. The new development is suitable for subsea applications with rated voltages of 36-72.5KV and higher (e.g. 132kV and above), for example, and with rated currents of 1250A or higher.

A switchgear with such a circuit breaker or circuit breaker system can be operated at locations between the power generation generators, for example windmills or wind turbines, and deeper waters suitable for most subsea applications.

The new design generally has two or more circuit breaker poles, each with a vacuum interrupter, in series to achieve required voltage levels, and where is necessary a single circuit breaker pole with a single vacuum interrupter can be utilized. In this way voltages of 36KV and with multiple poles voltages of 72KV and above can be accommodated. The circuit breaker poles are able to withstand the subsea pressure difference between vacuum and the sea water pressure at depth and are placed within a pressure compensated enclosure filled with a dielectric medium.

Thus, the new development provides a pressure resistant subsea circuit breaker pole in a pressure compensated enclosure suitable for voltages between 36KV and 72.5KV (and above with increased number of poles in series) and for rated currents of 1250A and higher. The rest of the subsea technologies around the circuit breaker can be utilized, and an overall cost of the new development is relatively low.

As shown in Figs. 1-4, the switching arrangement consists of one, two, or generally three pressure resistant circuit breaker poles (there can be more than three circuit breaker poles) placed in an arrangement (circular/triangular/linear) in a pressure compensated dielectric fluid filled enclosure 70. The circuit breaker pole is made up of one or more cylindrical housings 60 designed to withstand the subsea pressure. The individual housings are either bolted or clamped to each other to form in effect a single housing. Each circuit breaker pole contains one vacuum interrupter 10 or two vacuum interrupters 10 and 20 in series, an actuating device 50a, 50b for each vacuum interrupter or a multi-actuation device 50, 50a for both vacuum interrupters, connecting levers, pushrods (termed pushrods 30, 40) and associated connectors/penetrators for routing the electrical cables to the outside. The vacuum interrupters are either stand alone or embedded inside the cylindrical housing with contact terminals on either end of the vacuum interrupter extending outside the cylindrical housing. The actuator(s) are connected to the vacuum interrupter(s) using a pushrod. One end of each vacuum interrupter is either electrically connected outside the housing (by busbar) to symmetrize the field and reduce the maximum stress on contacts as shown in Figs. 1-3, or internally (not shown). The circuit breaker pole can be one long housing with both vacuum interrupters in series (see Figs. 1-3) or each vacuum interrupter can be in a different housing connected at one end to create a series connection (see Fig. 4).

## Claims

1. A subsea circuit breaker, comprising:
- a vacuum interrupter (10);
- a pushrod (30);
- an actuator (50, 50a); and
- a housing (60);
wherein the vacuum interrupter is located within the housing;
wherein the pushrod is located within the housing;
wherein the actuator is located within the housing;
wherein the actuator is configured to actuate the pushrod;
wherein the pushrod is configured when actuated to move a moveable contact of the vacuum interrupter with respect to a fixed contact of the vacuum interrupter; and
wherein the circuit breaker is configured to operate at a subsea water pressure.

2. Subsea circuit breaker according to claim 1, wherein the circuit breaker is configured to operate at the subsea water pressure associated with the operation of an offshore wind turbine.

3. Subsea circuit breaker according to any of claims 1-2, wherein the circuit breaker is configured to operate at voltages above 72kV.

4. Subsea circuit breaker according to any of claims 1-3, wherein the circuit breaker is configured to operate at currents of 1250A and above.

5. Subsea circuit breaker according to any of claims 1-4, wherein the housing is configured to withstand the subsea water pressure.

6. Subsea circuit breaker according to any of claims 1-5, wherein the circuit breaker comprises an enclosure (70), wherein the housing is located within the enclosure, and wherein a dielectric fluid is located between an outer surface of the housing and an inner surface of the enclosure.

7. Subsea circuit breaker according to claim 6, wherein the enclosure is configured to withstand the subsea water pressure.

8. Subsea circuit breaker according to any of claims 1-7, wherein the circuit breaker comprises a second vacuum interrupter (20) in series with the first vacuum interrupter (10), wherein the circuit breaker comprises a second pushrod (40), wherein the second pushrod is configured when actuated to move a moveable contact of the second vacuum interrupter with respect to a fixed contact of the second vacuum interrupter.

9. Subsea circuit breaker according to claim 8, wherein the second vacuum interrupter is located within the housing, wherein the second pushrod is located within the housing and wherein the actuator (50, 50a) is configured to actuate the second pushrod.

10. Subsea circuit breaker according to claim 8, wherein the second vacuum interrupter is located within the housing, wherein the second pushrod is located within the housing and, wherein the circuit breaker comprises a second actuator (50b), wherein the second actuator is located within the housing, and wherein the second actuator is configured to actuate the second pushrod.

11. Subsea circuit breaker according to claim 8, wherein the circuit breaker comprises a second housing (60), the circuit breaker comprises a second actuator (50b), wherein the second vacuum interrupter is located within the second housing, wherein the second pushrod is located within the second housing, wherein the second actuator is located within the second housing, wherein the second actuator is configured to actuate the second pushrod.

12. Subsea circuit breaker according to claim 11, wherein the second housing is configured to withstand the subsea water pressure.

13. Subsea circuit breaker according to claim 12, when dependent upon any of claims 6-7 or any of claims 8-11 when dependent upon any of claims 6-7, wherein the second housing is located within the enclosure, and wherein the dielectric fluid is located between an outer surface of the second housing and an inner surface of the enclosure.

14. A subsea circuit breaker system, comprising:
- a vacuum interrupter for a first phase (10), a vacuum interrupter for a second phase (10), and a vacuum interrupter for a third phase (10);
- a pushrod for the first phase (30), a pushrod for the second phase (30), and a pushrod for the third phase (30);
- an actuator for the first phase (50, 50a), an actuator for the second phase (50, 50a), and an actuator for the third phase (50, 50a); and
- a housing for a first phase (60), a housing for a second phase (60), and a housing for a third phase (60);
wherein the vacuum interrupter for the first phase, the pushrod for the first phase, and the actuator for the first phase are located within the housing for the first phase;
wherein the vacuum interrupter for the second phase, the pushrod for the second phase, and the actuator for the second phase are located within the housing for the second phase;
wherein the vacuum interrupter for the third phase, the pushrod for the third phase, and the actuator for the third phase are located within the housing for the third phase;
wherein the actuator for the first phase is configured to actuate the pushrod for the first phase, the actuator for the second phase is configured to actuate the pushrod for the second phase, the actuator for the third phase is configured to actuate the pushrod for the third phase;
wherein the pushrod for the first phase is configured when actuated to move a moveable contact of the vacuum interrupter for the first phase with respect to a fixed contact of the vacuum interrupter for the first phase, the pushrod for the second phase is configured when actuated to move a moveable contact of the vacuum interrupter for the second phase with respect to a fixed contact of the vacuum interrupter for the second phase, and the pushrod for the third phase is configured when actuated to move a moveable contact of the vacuum interrupter for the third phase with respect to a fixed contact of the vacuum interrupter for the third phase; and
wherein the circuit breaker system is configured to operate at a subsea water pressure.

15. A circuit breaker, comprising:
- a vacuum interrupter (10);
- a pushrod (30);
- an actuator (50, 50a); and
- a housing (60);
wherein the vacuum interrupter is located within the housing;
wherein the pushrod is located within the housing;
wherein the actuator is located within the housing;
wherein the actuator is configured to actuate the pushrod;
wherein the pushrod is configured when actuated to move a moveable contact of the vacuum interrupter with respect to a fixed contact of the vacuum interrupter; and
wherein the circuit breaker is configured to operate at a pressure above atmospheric pressure in a switchgear.
